# EUROPÄISCHE PATENTSCHRIFT

(11) **EP 0 923 038 B1**
(45) Veröffentlichungstag und Bekanntmachung des Hinweises auf die Patenterteilung: **06.11.2002**
(21) Anmeldenummer: 98115123.6
(22) Anmeldetag: 12.08.1998
(51) Int. Cl.: G06F 17/40

(54) **Messeinrichtung zur Ermittlung von physikalischen und/oder chemischen Eigenschaften von Gasen, Flüssigkeiten und/oder Feststoffen**
Measuring apparatus to determine the physical and/or chemical properties of gases, fluids and/or solids
Dispositif de mesure pour la détermination de propriétés physiques et/ou chimiques de gaz, de liquides et/ou de solides

(30) Priorität: 13.12.1997 DE 19755516
(43) Veröffentlichungstag der Anmeldung: 16.06.1999
(73) Patentinhaber: Endress + Hauser Conducta Gesellschaft für Mess- und Regeltechnik mbH + Co., D-70839 Gerlingen (DE)
(72) Erfinder: Babel, Wolfgang Dr., 71263 Weil der Stadt (DE); Wittmer, Detlev Dr., 75433 Maulbronn (DE)
(74) Vertreter: Dreiss, Fuhlendorf, Steimle & Becker

(56) Entgegenhaltungen:
- EP-A- 0 639 039
- US-A- 5 212 645
- US-A- 5 650 936

## Beschreibung

Die Erfindung betrifft eine Messeinrichtung zur Ermittlung von physikalischen und/oder chemischen Eigenschaften von Gasen, Flüssigkeiten und/oder Feststoffen mit einer Recheneinheit, die mit einer Sensorschaltung für einen Sensor verbunden ist, und die mit Programmen zur Verarbeitung der von dem Sensor gemessenen und von der Sensorschaltung aufbereiteten Messdaten versehen ist.

Bei einer derartigen Messeinrichtung ist als Sensor bspw. ein pH-Wert-Sensor oder eine Temperatursensor vorgesehen, der bspw. in eine Flüssigkeit eintaucht. Die von dem Sensor gemessenen Rohdaten werden zuerst von der Sensorschaltung aufbereitet, um danach als Messdaten an die Recheneinheit übermittelt zu werden. Die Recheneinheit kann die Messdaten bspw. auf einem angeschlossenen Monitor anzeigen oder über ein angeschlossenes externes Kommunikationssystem an sonstige Steuerungs- und/oder Überwachungseinrichtungen weiterleiten.

In der Recheneinheit sind eine Vielzahl von Programmbefehlen abgespeichert, die der Verarbeitung der empfangenen Messdaten dienen. So ist es bspw. möglich, dass die Messdaten von der Recheneinheit mit Hilfe der Programmbefehle umgerechnet werden. Ebenfalls ist es möglich, dass bspw. sensorabhängige Schwankungen der Messdaten mittels der Programmbefehle in der Recheneinheit ausgeglichen, bspw. gemittelt werden. Insgesamt wird mit Hilfe der Programmbefehle erreicht, dass die Messdaten, wie erwähnt, auf dem Monitor ausgegeben oder über das externe Kommunikationssystem weitergeleitet werden können.

Insbesondere die unterschiedlichen Messprinzipien von verschiedenen Sensoren haben zur Folge, dass einerseits die zu den Sensoren zugehörigen Sensorschaltungen jeweils unterschiedlich aufgebaut sind, sowie dass andererseits die Programmbefehle zur Verarbeitung der von den jeweiligen Sensoren und Sensorschaltungen erzeugten Messsignale ebenfalls unterschiedlich sind.

Insgesamt hat dies zur Folge, dass für eine Mehrzahl von Sensoren nicht nur eine Mehrzahl von Sensorschaltungen zur Verfügung stehen müssen, sondern auch eine Mehrzahl von Recheneinheiten mit den jeweils zugehörigen Programmbefehlen. Dies ist insbesondere im Hinblick auf die sich ergebende Vielfalt von Kombinationsmöglichkeiten und die daraus resultierende Verwaltung und Lagerung der einzelnen Komponenten äußerst aufwendig.

Aufgabe der Erfindung ist es, eine Messeinrichtung zur Ermittlung von physikalischen und/oder chemischen Eigenschaften von Gasen, Flüssigkeiten und/oder Feststoffen zu schaffen, die einfacher und kostengünstiger aufgebaut ist.

Diese Aufgabe wird bei einer Messeinrichtung der eingangs genannten Art durch die Erfindung dadurch gelöst, dass der Sensorschaltung ein austauschbares Programmmodul in der Recheneinheit zugeordnet ist.

Die Erfindung stellt somit eine modular aufgebaute Messeinrichtung zur Verfügung, die in Abhängigkeit von dem verwendeten Sensor mit dem jeweils zugehörigen Programmmodul ausgestattet werden kann. Es ist also nicht mehr erforderlich, dass für jeden Sensor eine spezielle zugehörige Recheneinheit hergestellt und insbesondere gelagert wird, sondern auf Grund der Erfindung ist es möglich, dass nur eine einzige Recheneinheit vorgehalten wird, die mit Hilfe der zu den verschiedenen Sensoren zugehörigen Programmmodule für alle Sensoren verwendet werden kann. Durch die erfindungsgemäße Modularität wird somit der Aufbau der Messeinrichtung und insbesondere deren Verwaltung und Lagerhaltung wesentlich vereinfacht. Daraus ergeben sich unmittelbar Kostenvorteile.

Die Erfindung kann einerseits dadurch realisiert werden, dass die Recheneinheit mit nur einer einzigen Sensorschaltung und damit nur einem einzigen Sensor verbunden ist. In diesem Fall ist es erforderlich, das zu dem Sensor zugehörige Programmmodul auf die Recheneinheit zu laden. Soll zu einem späteren Zeitpunkt ein anderer Sensortyp verwendet werden, so ist dies dadurch möglich, dass der Sensor mit der zugehörigen Sensorschaltung ausgetauscht wird, und dass auch das Programmmodul entfernt und das zu dem neuen Sensor zugehörige Programmmodul auf die Recheneinheit geladen wird.

Bei einer vorteilhaften Ausgestaltung der Erfindung sind zwei oder mehrere Sensorschaltungen vorgesehen, denen jeweils ein austauschbares Programmmodul in der Recheneinheit zugeordnet ist. In diesem Fall ist also die Recheneinheit mit zwei oder mehreren Sensorschaltungen und damit mit zwei oder mehreren Sensoren verbunden. Zur Realisierung einer derartigen Messeinrichtung ist es erforderlich, die Sensoren mit den zugehörigen Sensorschaltungen an die Recheneinheit anzuschließen und die zu den Sensoren zugehörigen Programmmodule auf die Recheneinheit zu laden. Soll in einem späteren Zeitpunkt einer der Sensoren mit der zugehörigen Sensorschaltung ausgetauscht werden, so ist dies ohne weiteres dadurch möglich, dass auch das zugehörige Programmmodul durch das zu dem neuen Sensor gehöriges Programmmodul ersetzt wird.

Durch die beschriebene vorteilhafte Ausgestaltung wird erreicht, dass die Programmmodule in der Recheneinheit nicht nur beliebig austauschbar, sondern auch beliebig erweiterbar sind. Auf diese Weise wird eine Messeinrichtung geschaffen, bei der die Anzahl und die Typen der Sensoren völlig frei gewählt werden kann. Auch bei dieser Ausgestaltung ist es dabei nicht erforderlich, für jede Kombinationsmöglichkeit der Messeinrichtung eine spezifische Recheneinheit vorzuhalten. Stattdessen kann die bereits vorhandene Recheneinheit auch für diese Ausgestaltung ohne weiteres verwendet werden, indem die entsprechenden Programmmodule auf die Recheneinheit geladen werden.

Bei einer vorteilhaften Weiterbildung der Erfindung ist eine Steuerschaltung zur Kopplung jeweils einer der Sensorschaltungen mit der Recheneinheit vorgesehen, wobei der Steuerschaltung ein Programmmodul in der Recheneinheit zugeordnet ist. Sind mehrere Sensorschaltungen mit der Recheneinheit verbunden, so muss die Übertragung von den einzelnen Sensorschaltungen zu der Recheneinheit gesteuert werden, zu diesem Zweck ist die Steuerschaltung vorgesehen, die insbesondere in der Form eines Multiplexers ausgestaltet sein kann. Desweiteren ist es erforderlich, dass die Steuerschaltung selbst gesteuert wird. Bspw. muss die Steuerschaltung auf die Anzahl der in einem bestimmten Anwendungsfall angeschlossenen Sensoren eingestellt werden. Zu diesem Zweck ist der Steuerschaltung ein Programmmodul in der Recheneinheit zugeordnet. Mit Hilfe des Programmmoduls wird also bspw. die Steuerschaltung intialisiert und ggf. zusätzlich überwacht.

Besonders zweckmäßig ist es, wenn das der Steuerschaltung zugeordnete Programmmodul austauschbar ausgebildet ist. In diesem Fall ist es möglich, dass das Programmmodul nur dann auf die Recheneinheit geladen wird, wenn mehrere Sensoren an die Recheneinheit angeschlossen sind. Wenn hingegen nur ein Sensor mit der Recheneinheit gekoppelt ist, und wenn dadurch die Steuerschaltung gar nicht erforderlich ist, so kann durch die Austauschbarkeit auf das Laden des zu der Steuerschaltung zugehörigen Programmmoduls auf die Recheneinheit verzichtet werden.

Bei weiteren vorteilhaften Weiterbildungen der Erfindung ist mindestens ein externes Kommunikationssystem bzw. mindestens eine Spannungsversorgung bzw. ein Interface vorgesehen, dem bzw. der bzw. dem jeweils ein Programmmodul in der Recheneinheit zugeordnet ist. Auf diese Weise entsteht eine vollständig modular aufgebaute Messeinrichtung. Jedem der genannten Komponenten, also dem externen Kommunikationssystem, der Spannungsversorgung und dem Interface, ist jeweils ein Programmmodul zugeordnet. Auch insoweit ist es deshalb nicht erforderlich, für jede Kombinationsmöglichkeit eine spezielle Recheneinheit herzustellen und insbesondere zu lagern. Stattdessen kann die bereits vorhandene Recheneinheit verwendet werden, die durch das Laden des jeweiligen Programmmoduls in die Lage versetzt wird, mit der zugehörigen Komponente zusammenzuarbeiten.

Verallgemeinert bedeutet dies, dass bei der Messeinrichtung nach der Erfindung jeder Hardware-Komponente ein Software-Modul zugeordnet ist. Ist es für einen bestimmten Anwendungsfall erforderlich, die Messeinrichtung mit einer bestimmten Anzahl und mit bestimmten Typen von Sensoren zu versehen, so wird dies dadurch erreicht, dass die erforderlichen Hardware-Komponenten an die Recheneinheit angeschlossen werden, und dass die zu den Hardware-Komponenten zugehörigen Software-Module auf die Recheneinheit geladen werden. Damit ist die Messeinrichtung individuell auf den bestimmten Anwendungsfall ausgerichtet. Die Messeinrichtung weist nur die für diesen Anwendungsfall erforderlichen Hardware-Komponenten und Software-Module auf. Insbesondere sind keine Programmbefehle auf der Recheneinheit vorhanden, die für den vorliegenden Anwendungsfall nicht erforderlich sind. Dies bringt den Vorteil mit sich, dass ein Kunde eine für seinen bestimmten Anwendungsfall erforderliche Messeinrichtung völlig frei zusammenstellen kann. Gleichzeitig bringt dies den Vorteil mit sich, dass trotz der genannten Freiheit die auf diese Weise zusammengestellte Messeinrichtung nur die tatsächlich erforderlichen Bauteile aufweist und damit kostengünstig hergestellt werden kann.

Bei einer vorteilhaften Ausgestaltung der Erfindung sind die Recheneinheit und die Spannungsversorgung und/oder das Interface durch einen Personalcomputer realisiert. Es ist somit kein gesonderter Aufbau der Recheneinheit erforderlich, sondern es genügt die Verwendung eines handelsüblichen Personalcomputers. Damit können die Kosten der erfindungsgemäßen Messeinrichtung wesentlich gesenkt werden.

Dabei ist es vorteilhaft, wenn der Personalcomputer zur Durchführung weiterer Aufgaben vorgesehen ist. Beispielsweise ist es möglich, den Personalcomputer dazu zu verweden, einen Prozess oder dergleichen zu steuern, von dem die erfindungsgemäße Messeinrichtung ein Bestandteil ist. Der Personalcomputer dient dann gleichzeitig der Messung und der Steuerung desselben Prozesses.

Bei einer vorteilhaften Ausgestaltung der Erfindung ist das zu einer der Komponenten zugehörige Programmmodul zur Durchführung aller Funktionen der Komponente vorgesehen. Dies bedeutet, dass das Programmmodul, das bspw. einem pH-Wert-Sensor zugeordnet ist, alle Umrechnungen, Skalierungen, Mittelwertbildungen, usw. aufweist, die erforderlich sind, um die von der zugehörigen Sensorschaltung gelieferten Messdaten korrekt und vollständig zu verarbeiten. Auf diese Weise wird gewährleistet, dass, wenn bspw. der genannte pH-Wert-Sensor in der Messeinrichtung verwendet wird, durch das Laden des zugehörigen Programmmoduls alle erforderlichen Maßnahmen getroffen sind, damit der pH-Wert-Sensor mit der Recheneinheit zusammenarbeiten kann.

Bei einer vorteilhaften Ausgestaltung der Erfindung ist ein Programmmodul zur Steuerung der anderen Programmmodule vorgesehen. Bei diesem Programmmodul handelt es sich mit anderen Worten um die Zentrale der Messeinrichtung, von der aus die anderen Programmmodule und damit die angeschlossenen Sensoren, Kommunikationssysteme, usw. gesteuert werden. Unter Steuerung wird in diesem Fall ganz allgemein die Verwaltung, Überwachung, usw. verstanden, die zu einem korrekten Funktionsablauf bei der Messeinrichtung erforderlich sind. In einem gewissen Umfang handelt es sich bei dem genannten zentralen Programmmodul um eine Art Betriebssystem der Recheneinheit und damit der Messeinrichtung.

Bei einer vorteilhaften Weiterbildung der Erfindung weist jedes der Programmmodule eine definierte Schnittstelle auf. Auf diese Weise wird erreicht und gewährleistet, dass das Programmmodul ohne Aufwand austauschbar und/oder erweiterbar ist.

Bei einer weiteren vorteilhaften Weiterbildung der Erfindung bildet jedes der Programmmodule ein Objekt im Sinne einer objektorientierten Programmierung. Durch die genannte objektorientierte Programmierung wird im Wesentlichen automatisch erreicht, dass jeder Hardware-Komponente zumindest ein Software-Modul zugeordnet ist. Auf diese Weise wird durch die objektorientierte Programmierung der durch die Erfindung geschaffene modulare Aufbau der Messeinrichtung sicher und vollständig erreicht.

Bei einer besonders vorteilhaften Ausgestaltung der Erfindung, die auch eine völlig unabhängige, separate Erfindung darstellen kann, sind die zu einer der Komponenten zugehörigen Daten, insbesondere komponentenspezifische Abgleichdaten o.dgl., auf der Komponente abgespeichert.

Die komponentenspezifischen Abgleichdaten sind also nicht ursprünglich auf der Recheneinheit abgespeichert. Stattdessen sind sie auf der jeweiligen Komponente, also entweder auf dem Sensor selbst oder auf der zugehörigen Sensorschaltung abgespeichert.

Bei der Inbetriebnahme der Messeinrichtung holt nunmehr die Recheneinheit die komponentenspezifischen Abgleichdaten bspw. von dem Sensor ab. Danach sind diese Daten in der Recheneinheit vorhanden und können somit von der Recheneinheit bei der Verarbeitung der von dem Sensor gelieferten Messdaten berücksichtigt werden.

Erleidet der Sensor nunmehr bspw. auf Grund von Alterungserscheinungen einen Defekt, so kann der defekte Sensor ohne weiteres durch einen neuen Sensor ersetzt werden. Die zu dem neuen Sensor zugehörigen Abgleichdaten sind wiederum auf dem Sensor selbst abgespeichert. Bei der Inbetriebnahme des neuen Sensors werden diese neue Abgleichdaten in die Recheneinheit geladen, so dass nunmehr die Recheneinheit sofort auf der Grundlage der neuen Abgleichdaten die von dem Sensor gelieferten Messdaten verarbeiten kann. Eine Eingabe der Abgleichdaten in die Recheneinheit ist nicht erforderlich. Ebenfalls ist insbesondere keine vor Ort erforderliche Kalibrierung des neuen Sensors notwendig. Dieser kann bereits bei der Herstellung kalibriert werden. Die festgestellten komponentenspezifischen Abgleichdaten können dann ebenfalls bei der Herstellung auf dem Sensor abgespeichert werden.

Sind die genannten Abgleichdaten nicht auf dem Sensor, sondern auf der Sensorschaltung abgespeichert, so ist bei einem Defekt des Sensors auch der Austausch der Sensorschaltung oder zumindest der Austausch des entsprechenden Speichers auf der Sensorschaltung, bspw. eines PROM's o.dgl. erforderlich.

Besonders vorteilhaft ist die Verwendung der erfindungsgemäßen Messeinrichtung bei der Flüssigkeits- und/oder Gasanalyse und/oder bei der Messung von Feuchte in Flüssigkeiten und/oder Gasen.

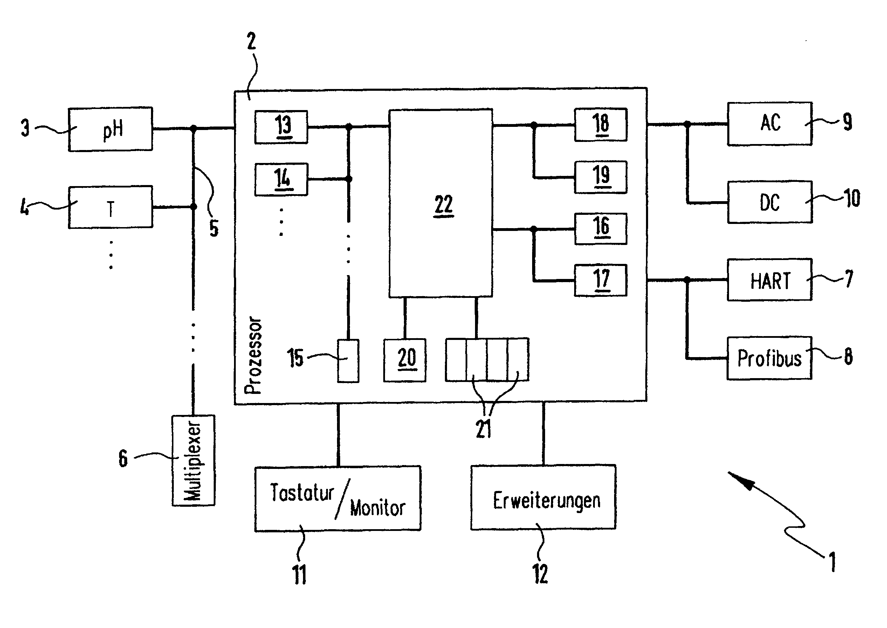

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels einer erfindungsgemäßen Messeinrichtung für die Flüssigkeits- und/oder Gasanalyse und/oder für die Messung von Feuchte in Flüssigkeiten und/oder Gasen.

In der Figur ist eine Messeinrichtung 1 dargestellt, die eine Recheneinheit 2 aufweist, die mit einer oder mit mehreren Sensorschaltungen 3, 4 verbunden ist. Die Recheneinheit 2 ist vorzugsweise mittels eines digitalen Prozessors realisiert. An die Sensorschaltungen 3, 4 können in nicht dargestellter Weise Sensoren angeschlossen werden. Bei den Sensoren kann es sich bspw. um einen pH-Wert-Sensor oder um einen Temperatursensor oder um einen Drucksensor oder um einen Durchflusssensor oder um einen Füllstandssensor oder um einen Leitfähigkeitssensor oder um einen Sensor zur Messung des Sauerstoffgehalts oder um einen Sensor zur Messung des Chlor- oder Chlordioxidgehalts oder um einen Trübungssensor oder um einen Feuchtesensor o.dgl. handeln. Die zugehörigen Sensorschaltungen 3, 4 sind dann jeweils als pH-Wert-Sensorschaltung oder als Temperatursensorschaltung usw. ausgebildet. Die Verbindung zwischen der Recheneinheit zur Ermittlung von physikalischen und/oder chemischen Eigenschaften von Gasen, Flüssigkeiten und/oder Feststoffen und den Sensorschaltungen 3, 4 ist mittels eines internen Bussystems 5 realisiert, bei dem es sich bspw. um einen I²C-Bus handeln kann. Ebenfalls kann eine Schnittstelle nach dem sog. HART-Protokoll oder ein sog. Profibus oder dergleichen vorgesehen sein.

Es ist möglich, dass nur eine der Sensorschaltungen 3, 4 und damit nur einer der Sensoren an die Recheneinheit 2 angeschlossen ist. Ebenfalls ist jedoch möglich, dass eine beliebige Anzahl von Sensorschaltungen 3, 4 mit den zugehörigen Sensoren mit der Recheneinheit 2 verbunden sind. In dem letztgenannten Fall ist eine Steuerschaltung 6 vorgesehen, die vorzugsweise als Multiplexer realisiert ist. Mit Hilfe der Steuerschaltung 6 wird die elektrische Verbindung zwischen der Recheneinheit 2 und den Sensorschaltungen 3, 4 derart gesteuert, dass immer nur eine einzige der Sensorschaltungen 3, 4 mit der Recheneinheit 2 verbunden ist. Vorzugsweise werden die Sensorschaltungen 3, 4 abwechselnd aufeinanderfolgend mit der Recheneinheit 2 verbunden.

An die Recheneinheit 2 ist u.a. zumindest ein externes Kommunikationssystem 7, 8 angeschlossen. Dabei kann es sich bspw. um eine Schnittstelle nach dem sog. HART-Protokoll oder um einen sog. Profibus oder um einen sog. Foundation Field Bus oder um einen sonstigen Feldbus handeln.

Desweiteren ist an die Recheneinheit 2 mindestens eine Spannungsversorgung 9, 10 angeschlossen. Dabei kann es sich um eine Wechselspannungsversorgung AC oder um eine Gleichspannungsversorgung DC handeln.

Desweiteren kann an die Recheneinheit 2 ein Interface 11 für eine Bedienperson angeschlossen sein. Bei diesem Interface 11 kann es sich bspw. um eine Tastatur und/oder um einen Monitor handeln.

Schließlich können auch noch Erweiterungen 12 an die Recheneinheit 2 angeschlossen sein, bei denen es sich bspw. um ein oder um mehrere Relais handeln kann, die zu Steuerungszwecken oder dergleichen vorgesehen sind.

Besonders vorteilhaft ist es, wenn zumindest die Recheneinheit 2, das Interface 11 und/oder die Spannungsversorgung 9 durch einen handelsüblichen Personalcomputer realisiert sind. Das interne Bussystem 5 und das externe Kommunikationssystem 7, 8 können über eine serielle und/oder eine parallele Schnittstelle und/oder eine sogenannte PCMCIA-Karte und/oder sonstige Steckkarten des Personalcomputers realsiert sein, die in entsprechende Einschübe des Personalcomputers eingesteckt werden können.

Insbesondere bei der vorstehend genannten Verwendung eines Personalcomputers ist es möglich, dass dieser Personalcomputer auch zur Durchführung von Auswertungs-, Steuerungs- und/oder Archivierungsaufgaben oder dergleichen vorgesehen ist. Die hierfür von der Messeinrichtung 1 erforderlichen Informationen können dann innerhalb des Personalcomputers weitergegeben werden. Beispielsweise kann der Personalcomputer für Steuerungsaufgaben vorgesehen sein, für die dann innerhalb des Personalcomputers die erforderlichen Daten übergeben werden.

Ebenfalls ist es bei der Verwendung eines Personalcomputers möglich, derartige Informationen bzw. Daten auf einer Diskette oder dergleichen zu speichern und von dort aus z. B. in einem anderen Personalcomputer zu verwenden.

Die beschriebenen Sensorschaltungen 3, 4, die Steuerschaltung 6, die externen Kommunikationssysteme 7, 8, die Versorgungsspannungen 9, 10, das Interface 11 und die Erweiterungen 12 stellen Hardware-Komponenten der Messeinrichtung 1 dar, die an die Recheneinheit 2 angeschlossen oder zumindest mit dieser gekoppelt sind. Zu jeder dieser Hardware-Komponenten ist in der Recheneinheit 2 ein zugehöriges und zugeordnetes Software-Modul vorhanden.

So sind den Sensorschaltungen 3, 4 in der Recheneinheit 2 entsprechende Sensormodule 13, 14 zugeordnet. Desweiteren ist der Steuerschaltung 6 in der Recheneinheit 2 ein Steuermodul 15 zugeordnet. Den externen Kommunikationssystemen 7, 8 sind in der Recheneinheit 2 entsprechende Kommunikationsmodule 16, 17 zugeordnet. Den Spannungsversorgungen 9, 10 sind in der Recheneinheit 2 entsprechende Spannungsversorgungsmodule 18, 19 zugeordnet. Dem Interface 11 ist in der Recheneinheit 2 ein Interfacemodul 20 und den Erweiterungen 12 sind in der Recheneinheit 2 entsprechende Erweiterungsmodule 21 zugeordnet.

Jedes der genannten Software-Module bzw. Programmmodule 13, 14, 15, 16, 17, 18, 19, 20, 21 besteht aus einer Abfolge von Programmbefehlen. Dabei ist jedes dieser Software-Module derart ausgebildet, dass es alle erforderlichen Funktionen und Maßnahmen ausführen kann, die zum Betrieb der zugehörigen Hardware-Komponente notwendig sind. Beispielhaft ist also das Sensormodul 14 derart programmiert, dass es die von der zugehörigen Sensorschaltung 4 erhaltenen Messdaten in der erwünschten und notwendigen Art und Weise umwandeln und aufbereiten kann, so dass danach bspw. eine Ausgabe dieser Messdaten über das Interface 11, insbesondere über den Monitor, oder eine Weiterleitung dieser Messdaten über die externen Kommunikationssysteme 7, 8 möglich ist.

Desweiteren ist jedes der Software-Module bzw. Programmmodule 13, 14, 15, 16, 17, 18, 19, 20, 21 derart ausgestaltet, dass es über eine definierte Schnittstelle zugänglich ist. Diese Schnittstelle kann dabei bei den unterschiedlichen Typen der Sensorschaltungen 3, 4 gleichartig oder auch typabhängig festgelegt sein. In jedem Fall ist die Schnittstelle derart definiert, dass bspw. für ein- und dieselbe Sensorschaltung 4 das zugehörige Sensormodul 14 ohne weiteres durch ein bspw. weiterentwickeltes Sensormodul 14 ersetzt werden kann.

Vorzugsweise ist jedes der Software-Module, also jedes der Programmmodule 13, 14, 15, 16, 17, 18, 19, 20, 21 im Sinne einer objektorientierten Programmierung ausgebildet. Damit wird eine feste Zuordnung der einzelnen Software-Module zu den jeweils zugehörigen Hardware-Komponenten sichergestellt.

Die beschriebenen Software-Module bzw. Programmmodule 13, 14, 15, 16, 17, 18, 19, 20, 21 sind alle mit einem zentralen Programmmodul 22 gekoppelt. Dieses zentrale Programmmodul ist derart ausgebildet, dass es die angeschlossenen Software-Module über die genannten Schnittstellen ansprechen kann. Desweiteren ist dieses zentrale Programmmodul 22 derart ausgestaltet, dass es im Sinne der objektorientierten Programmierung der gesamten Recheneinheit 2 zugeordnet ist. Insoweit stellt das zentrale Programmmodul 22 eine Art Betriebssystem für die daran angeschlossenen Programmmodule 13, 14, 15, 16, 17, 18, 19, 20, 21 dar. Mit Hilfe des zentralen Programmmoduls 22 werden die anderen Programmmodule 13, 14, 15, 16, 17, 18, 19, 20, 21 gesteuert und überwacht usw.

Insgesamt ist damit die Messeinrichtung 1 modulartig aufgebaut. Dieser modulare Aufbau bezieht sich dabei einerseits auf die Hardware-Komponenten sowie andererseits auf die Software-Module.

Die Hardware-Komponenten, also bspw. die Sensorschaltungen 3, 4 oder die Steuerschaltung 6 oder auch die Recheneinheit 2 können auf unterschiedlichen Platinen untergebracht sein. Es ist jedoch ebenfalls möglich, dass bspw. die Recheneinheit 2 und eine der Sensorschaltungen 3, 4 auf einer gemeinsamen Platine untergebracht sind. Ebenfalls ist es möglich, dass die Recheneinheit 2 und eine der Sensorschaltungen 3 auf einer gemeinsamen Platine untergebracht sind und dass weitere Sensorschaltungen 4 auf bspw. aufsteckbaren Platinen enthalten sind. In diesem Fall kann die Steuerschaltung 6 ebenfalls auf einer aufsteckbaren Platine untergebracht sein, wobei dann die Steckverbindungen, mit denen die aufsteckbaren Platinen miteinander verbunden sind, das interne Bussystem 5 bilden.

Entsprechend können auch die externen Kommunikationssysteme 7, 8 und die Spannungsversorgungen 9, 10 auf einzelnen oder gemeinsamen Platinen untergebracht sein.

Auf Grund des modularen Aufbaus können die Software-Module beliebig ausgetauscht und/oder erweitert werden. Dies bedeutet, dass die Software-Module entsprechend der Ausgestaltung der Hardware-Komponenten auf die Recheneinheit 2 geladen werden. Die Software-Module stellen damit ein Abbild der Hardware-Komponenten dar.

Ist bspw. nur eine Sensorschaltung 3 vorhanden, so ist in der Recheneinheit 2 auch nur das zugehörige Sensormodul 13 vorhanden. Sind mehrere Sensorschaltungen 3, 4 sowie die Steuerschaltung 6 vorhanden, so sind in der Recheneinheit 2 die jeweils zugehörigen Sensormodule 13, 14 und das Steuermodul 15 vorhanden.

Es ist also ohne weiteres möglich, die Messeinrichtung 1 um weitere Sensorschaltungen mit den jeweils zugehörigen Sensormodulen zu erweitern. Ebenfalls ist es jederzeit möglich, eine vorhandene Sensorschaltung gegen eine andere Sensorschaltung desselben Typs oder auch eines anderen Typs mit dem jeweils zugehörigen Sensormodul auszutauschen.

Vorzugsweise ist in der Recheneinheit ein löschbarer und wiederprogrammierbarer Speicher vorhanden. Damit ist es möglich, ohne größeren Aufwand Software-Module auszutauschen und/oder zu erweitern. Ebenfalls ist es auf diese Weise möglich, die Software-Module über ein an die Recheneinheit 2 angeschlossenes Modem ferngesteuert auf die Recheneinheit 2 zu laden.

Unabhängig von der bisher beschriebenen Modularität der Messeinrichtung 1 sind die Abgleichdaten der zu den Sensorschaltungen 3, 4 zugehörigen Sensoren entweder auf dem Sensor selbst oder in der Sensorschaltung 3, 4 abgespeichert. Die Abspeicherung erfolgt dabei auf der Grundlage einer Kalibrierung bei der Herstellung des jeweiligen Sensors. Im Betrieb werden die sensorspezifischen Abgleichdaten in die Recheneinheit 2 geladen. Dort können die Abgleichdaten dann von der Recheneinheit 2 bei der Verarbeitung der von den Sensorschaltungen 3, 4 gelieferten Messdaten berücksichtigt werden.

Tritt ein Defekt eines der Sensoren bspw. auf Grund von Alterungserscheinungen auf, so ist es nunmehr erforderlich, den defekten Sensor mit den darauf abgespeicherten Abgleichdaten zu ersetzen. Nachdem der neue Sensor mit den neuen Abgleichdaten an die zugehörige Sensorschaltung angeschlossen ist, werden die Abgleichdaten wiederum in die Recheneinheit geladen, so dass diese mit den korrekten Abgleichdaten weiterarbeitet.

Sind die Abgleichdaten auf der zugehörigen Sensorschaltung abgespeichert, so ist es erforderlich, zusätzlich zu dem defekten Sensor auch noch zumindest den Speicher auszutauschen, auf dem die Abgleichdaten abgespeichert sind. Bei diesem Speicher kann es sich bspw. um einen sog. PROM handeln, der in einen zugehörigen Sockel auf der Sensorschaltung eingesteckt werden kann.

## Patentansprüche

1. Messeinrichtung (1) zur Ermittlung von physikalischen und/oder chemischen Eigenschaften von Gasen, Flüssigkeiten und/oder Feststoffen mit einer Recheneinheit (2), die mit einer Sensorschaltung (3, 4) für einen Sensor verbunden ist, und die mit Programmbefehlen zur Verarbeitung der von dem Sensor gemessenen und von der Sensorschaltung (3, 4) aufbereiteten Messdaten versehen ist, **dadurch gekennzeichnet, dass** der Sensorschaltung (3, 4) ein austauschbares Programmmodul (13, 14) in der Recheneinheit (2) zugeordnet ist.

2. Messeinrichtung (1) nach Anspruch 1, **dadurch gekennzeichnet, dass** zwei oder mehrere Sensorschaltungen (3, 4) vorgesehen sind, denen jeweils ein austauschbares Programmmodul (13, 14) in der Recheneinheit (2) zugeordnet ist.

3. Messeinrichtung (1) nach Anspruch 2, **dadurch gekennzeichnet, dass** eine Steuerschaltung (6) zur Kopplung jeweils einer der Sensorschaltungen (3, 4) mit der Recheneinheit (2) vorgesehen ist, wobei der Steuerschaltung (6) ein Programmmodul (15) in der Recheneinheit (2) zugeordnet ist.

4. Messeinrichtung (1) nach einem der Ansprüche 1 bis 3, **dadurch gekennzeichnet, dass** mindestens ein externes Kommunikationssystem (7, 8) vorgesehen ist, dem ein Programmmodul (16, 17) in der Recheneinheit (2) zugeordnet ist.

5. Messeinrichtung (1) nach einem der Ansprüche 1 bis 4, **dadurch gekennzeichnet, dass** mindestens eine Spannungsversorgung (9, 10) vorgesehen ist, der ein Programmmodul (18, 19) in der Recheneinheit (2) zugeordnet ist.

6. Messeinrichtung (1) nach einem der Ansprüche 1 bis 5, **dadurch gekennzeichnet, dass** ein Interface (11), insbesondere eine Tastatur und/oder ein Monitor vorgesehen sind, denen jeweils ein Programmmodul (20) in der Recheneinheit (2) zugeordnet ist.

7. Messeinrichtung (1) nach Anspruch 5 oder Anspruch 6, **dadurch gekennzeichnet, dass** die Recheneinheit (2) und die Spannungsversorgung (9, 10) und/oder das Interface (11) durch einen Personalcomputer realisiert sind.

8. Messeinrichtung (1) nach Anspruch 7, **dadurch gekennzeichnet, dass** der Personalcomputer zur Durchführung weiterer Aufgaben vorgesehen ist.

9. Messeinrichtung (1) nach einem der vorstehenden Ansprüche, **dadurch gekennzeichnet, dass** das zu einer der Komponenten zugehörige Programmmodul (13, 14, 15, 16, 17, 18, 19, 20, 21) zur Durchführung aller Funktionen der Komponente vorgesehen ist.

10. Messeinrichtung (1) nach einem der vorstehenden Ansprüche, **dadurch gekennzeichnet, dass** ein Programmmodul (22) zur Steuerung der anderen Programmmodule (13, 14, 15, 16, 17, 18, 19, 20, 21) vorgesehen ist.

11. Messeinrichtung (1) nach einem der vorstehenden Ansprüche, **dadurch gekennzeichnet, dass** jedes der Programmmodule (13, 14, 15, 16, 17, 18, 19, 20, 21) eine definierte Schnittstelle aufweist.

12. Messeinrichtung (1) nach einem der vorstehenden Ansprüche, **dadurch gekennzeichnet, dass** jedes der Programmmodule (13, 14, 15, 16, 17, 18, 19, 20, 21) ein Objekt im Sinne einer objektorientierten Programmierung bildet.

13. Messeinrichtung (1) nach einem der vorstehenden Ansprüche, **dadurch gekennzeichnet, dass** das Programmmodul (13, 14) insbesondere über ein Modem o.dgl. in die Recheneinheit (2) übermittelbar ist.

14. Messeinrichtung, nach einem der vorstehenden Ansprüche, **dadurch gekennzeichnet, dass** die zu einer der Komponenten zugehörigen Daten komponentenspezifische Abgleichdaten auf der Komponente abgespeichert sind.

15. Messeinrichtung (1) nach einem der vorstehenden Ansprüche, **gekennzeichnet durch** die Verwendung bei der Flüssigkeits- und/oder Gasanalyse und/oder bei der Messung von Feuchte in Flüssigkeiten und/oder Gasen.

16. Messeinrichtung (1) nach einem der vorstehenden Ansprüche, **gekennzeichnet durch** die Verwendung von einem oder mehreren der vorstehenden Sensoren: Drucksensor, Durchflusssensor, Füllstandssensor, ph-Wert-Sensor, Trübungssensor, Temperatursensor, Sensor zur Messung des Chlor- oder Chlordioxidgehalts, Sensor zur Messung des Sauerstoffgehalts, Leitfähigkeitssensor, Feuchtesensor.

## Claims

1. Measuring device (1) for determining physical and/or chemical properties of gases, liquids and/or solids having a computer unit (2) linked to a sensor circuit (3, 4) for a sensor, and provided with program commands for processing of the measurement data measured by the sensor and prepared by the sensor circuit (3, 4), **characterised in that** an interchangeable program module (13, 14) in the computer unit (2) is assigned to the sensor circuit (3, 4).

2. Measuring device (1) according to Claim 1, **characterised in that** two or more sensor circuits (3, 4) are provided to each of which an interchangeable program module (13, 14) in the computer unit (2) is assigned.

3. Measuring device (1) according to Claim 2, **characterised in that** a control circuit (6) is provided for linking one of the sensor circuits (3, 4), respectively, to the computer unit (2), whereby a program module (15) in the computer unit (2) is assigned to the control circuit (6).

4. Measuring device (1) according to one of the claims 1 to 3, **characterised in that** at least one external communication system (7, 8) is provided to which a program module (16, 17) in the computer unit (2) is assigned.

5. Measuring device (1) according to one of the claims 1 to 4, **characterised in that** at least one voltage supply (9, 10) is provided to which a program module (18, 19) in the computer unit (2) is assigned.

6. Measuring device (1) according to one of the claims 1 to 5, **characterised in that** an interface (11), particularly a keyboard and/or a monitor is provided to each of which a program module (20) in the computer unit (2) is assigned.

7. Measuring device (1) according to Claim 5 or Claim 6, **characterised in that** the computer unit (2) and the voltage supply (9, 10) and/or the interface (11) are realised through a personal computer.

8. Measuring device (1) according to Claim 7, **characterised in that** the personal computer is provided for performing further tasks.

9. Measuring device (1) according to one of the previous claims, **characterised in that** the program module (13, 14, 15, 16, 17, 18, 19, 20, 21) belonging to one of the components is provided for performing all the functions of the components.

10. Measuring device (1) according to one of the previous claims, **characterised in that** a program module (22) is provided for controlling the other program modules (13, 14, 15, 16, 17, 18, 19, 20, 21).

11. Measuring device (1) according to one of the previous claims, **characterised in that** each of the program modules (13, 14, 15, 16, 17, 18, 19, 20, 21) has a defined interface.

12. Measuring device (1) according to one of the previous claims, **characterised in that** each of the program modules (13, 14, 15, 16, 17, 18, 19, 20, 21) comprises an object in the context of object-oriented programming.

13. Measuring device (1) according to one of the previous claims, **characterised in that** the program module (13, 14) may be transmitted to the computer unit (2), particularly via a modem or similar.

14. Measuring device (1) according to one of the previous claims, **characterised in that** the data belonging to one of the components are component-specific adjustment data stored on the component.

15. Measuring device (1) according to one of the previous claims, **characterised in that** it is used in liquid and/or gas analysis and/or in measuring moisture in liquids and/or gases.

16. Measuring device (1) according to one of the previous claims, **characterised in that** it uses one or more of the previous sensors: pressure sensor, flow sensor, fill level sensor, pH value sensor, turbidity sensor, temperature sensor, sensor for measuring chlorine or chlorine dioxide content, sensor for measuring oxygen content, conductivity sensor, humidity sensor.

## Revendications

1. Dispositif de mesure (1) pour la détermination de propriétés physiques et/ou chimiques de gaz, de liquides et/ou de solides comportant une unité de calcul (2) qui est reliée à un circuit capteur (3, 4) destiné à un capteur et qui est pourvue de commandes de programme pour le traitement des données de mesure mesurées par le capteur et préparées par le circuit capteur (3, 4), **caractérisé en ce que** l'on adjoint au circuit capteur (3, 4) un module de programmation interchangeable (13, 14) qui est disposé dans l'unité de calcul (2).

2. Dispositif de mesure (1) selon la revendication 1, **caractérisé en ce que** l'on prévoit deux ou plusieurs circuits capteurs (3, 4) auxquels on adjoint, à chaque fois, un module de programmation interchangeable (13, 14) qui est disposé dans l'unité de calcul (2).

3. Dispositif de mesure (1) selon la revendication 2, **caractérisé en ce que** l'on prévoit un circuit de commande (6) pour le couplage, à chaque fois, d'un des circuits capteurs (3, 4) avec l'unité de calcul (2), un module de programmation (15), qui est disposé dans l'unité de calcul (2), étant adjoint au circuit de commande (6).

4. Dispositif de mesure (1) selon l'une quelconque des revendications 1 à 3, **caractérisé en ce que** l'on prévoit au moins un système de communication externe (7, 8) auquel on adjoint un module de programmation (16, 17) qui est disposé dans l'unité de calcul (2).

5. Dispositif de mesure (1) selon l'une quelconque des revendications 1 à 4, **caractérisé en ce que** l'on prévoit au moins une alimentation en tension (9, 10) à laquelle on adjoint un module de programmation (18, 19) qui est disposé dans l'unité de calcul (2).

6. Dispositif de mesure (1) selon l'une quelconque des revendications 1 à 5, **caractérisé en ce que** l'on prévoit une interface (11), en particulier un clavier ou une moniteur, auxquels on adjoint, à chaque fois, un module de programmation (20) qui est disposé dans l'unité de calcul (2).

7. Dispositif de mesure (1) selon la revendication 5 ou 6, **caractérisé en ce que** l'unité de calcul (2) et l'alimentation en tension (9, 10) et/ou l'interface (11) sont réalisés sous la forme d'un ordinateur individuel.

8. Dispositif de mesure (1) selon la revendication 7, **caractérisé en ce que** l'ordinateur individuel est prévu pour la réalisation d'autres tâches.

9. Dispositif de mesure (1) selon l'une quelconque des revendications précédentes, **caractérisé en ce que** le module de programmation (13, 14, 15, 16, 17, 18, 19, 20, 21) correspondant à l'un des composants est prévu pour la réalisation de toutes les fonctions des composants.

10. Dispositif de mesure (1) selon l'une quelconque des revendications précédentes, **caractérisé en ce que** l'on prévoit un module de programmation (22) pour la commande des autres modules de programmation (13, 14, 15, 16, 17, 18, 19, 20, 21).

11. Dispositif de mesure (1) selon l'une quelconque des revendications précédentes, **caractérisé en ce que** chacun des modules de programmation (13, 14, 15, 16, 17, 18, 19, 20, 21) comporte une interface définie.

12. Dispositif de mesure (1) selon l'une quelconque des revendications précédentes, **caractérisé en ce que** chacun des modules de programmation (13, 14, 15, 16, 17, 18, 19, 20, 21) constitue un objet au sens de la programmation orientée objets.

13. Dispositif de mesure (1) selon l'une quelconque des revendications précédentes, **caractérisé en ce que** le module de programmation (13, 14) peut transmettre, en particulier par l'intermédiaire d'un modem ou analogue qui est disposé dans l'unité de calcul (2).

14. Dispositif de mesure (1) selon l'une quelconque des revendications précédentes, **caractérisé en ce que** les données correspondant à un des composants, données de réglage spécifiques au composant, sont mémorisées sur le composant.

15. Dispositif de mesure (1) selon l'une quelconque des revendications précédentes, **caractérisé par** son utilisation dans le cas de l'analyse de liquides et/ou de gaz et/ou dans le cas de la mesure de l'humidité dans des liquides et/ou des gaz.

16. Dispositif de mesure (1) selon l'une quelconque des revendications précédentes, **caractérisé par** l'utilisation d'un ou plusieurs des capteurs suivants : capteur de pression, capteur de débit, capteur de niveau, capteur de la valeur du ph, capteur de néphélométrie, capteur de température, capteur pour la mesure de la teneur en chlore ou en dioxyde de chlore, capteur pour la mesure de la teneur en oxygène, capteur de la conductibilité, capteur d'humidité.
